# EUROPEAN PATENT SPECIFICATION

(11) **EP 4 129 620 B1**
(45) Date of publication and mention of the grant of the patent: **04.09.2024**
(21) Application number: 21780122.4
(22) Date of filing: 31.03.2021
(51) Int. Cl.: B29C 45/76, B29C 45/78

(54) **DEVICE, METHOD, AND PROGRAM**
VORRICHTUNG, VERFAHREN UND PROGRAMM
DISPOSITIF, PROCÉDÉ ET PROGRAMME

(30) Priority: 31.03.2020 JP 2020064423
(43) Date of publication of application: 08.02.2023
(73) Proprietor: Asahi Kasei Kabushiki Kaisha, Tokyo 1000006 (JP)
(72) Inventor: KIMURA, Ippei, Tokyo 1000006 (JP); MORITA, Tatsuya, Tokyo 1000006 (JP)
(74) Representative: Hoffmann Eitle
(86) International application number: PCT/JP2021/014080
(87) International publication number: WO 2021/201189

(56) References cited:
- EP-A1- 0 377 736
- EP-A1- 0 566 738
- EP-A1- 0 737 560
- EP-A1- 1 166 994
- JP-A- H0 435 923
- US-A1- 2008 102 147
- US-A1- 2018 203 431

## Description

### BACKGROUND

### 1. TECHNICAL FIELD

The present invention relates to an apparatus, a method, and a program.

### 2. RELATED ART

When resin is moulded into an article, a moulding condition needs to be adjusted by an operator of a fabrication apparatus in order to reduce occurrence of a defective product. Patent Document 1 describes about predicting a variation in an item to be evaluated under a moulding condition, and graphically displaying a same in a way of assisting an operator.

Patent Document 1: Japanese Patent Application Publication No. 2006-123172

However, according to Patent Document 1, the operator will need to consider the variation in the item to be evaluated by changing many of those moulding conditions, thus it takes a long time to adjust the moulding conditions.

EP 0 377 736 A1 relates to a control unit having a function of inferring causes for various problems relating to a machine as an object of control, such as problems in the machine as an object of control, problems in a product processed by the machine as an object of control and the like, and countermeasures for dissolving the causes, and more particularly, to a control unit using a so-called expert system in which the knowledge and experiences of high-level specialists in the relating field are accumulated.

EP 0 737 560 A1 relates to a method of analyzing factors affecting the quality of products molded by an injection molding machine and to a method of adjusting molding conditions by utilizing the analyzing method.

EP 1 166 994 A1 discloses method of controlling a process for manufacturing injection moulded articles using an injection moulding machine including testing predetermined physical properties of selected articles; determining predetermined properties of the process; and adjusting the process parameters set on the injection moulding machine to achieve pre-set values of the physical properties of the articles for subsequent articles manufactured by the process.

US 2008/102147 A1 relates to a support apparatus for supporting a worker involved in operating an injection-molding machine.

US 2018/203431 A1 discloses a method of simulating a shaping process involves calculating states of objects involved in the shaping process in discrete and successive time steps with presetting of conditions, and the conditions represent input parameters of the shaping process.

EP 0 566 738 A1 relates to an injection molding condition setting method, more particularly, to a method for setting optimum molding conditions by utilizing an expert system.

A first aspect of the present invention provides an apparatus for assisting resin moulding, as defined in claim 1.

The display processing unit may be configured to execute display processing for at least one of: causing the display device to display a rank of the degree of influence near the display of the selected at least one moulding factor; or causing the display device to display at least a part of a plurality of degrees of influence in a predetermined format.

The selection unit may be configured to execute at least one of: selecting, among the plurality of moulding factors, at least one moulding factor having the degree of influence ranked within predetermined ranks in a descending order; or selecting, among the plurality of moulding factors, at least one moulding factor having the degree of influence being a predetermined threshold value or more.

The calculation unit may be configured to calculate, as the degree of influence for each of the plurality of moulding factors, an absolute value of a changed rate of the analysis target characteristic in a case of changing a corresponding one among the plurality of moulding factors.

The apparatus may be configured to include a prediction unit which includes a model for generating prediction data for the analysis target characteristic from values of the plurality of moulding factors, and which is for generating by using the model, in response to data regarding at least one of the plurality of moulding factors of the resin moulding being input, the prediction data for the analysis target characteristic.

The apparatus may be configured to include an obtaining unit for obtaining learning data containing a set of values of the plurality of moulding factors and a value of the analysis target characteristic, of which values taken from a result of performing resin moulding in advance. The apparatus may be configured to include a learning unit for learning, by using the learning data, a model that generates prediction data for the analysis target characteristic from the values of the plurality of moulding factors.

The calculation unit may be configured to calculate, for each of the plurality of moulding factors, degrees of influence on the plurality of analysis target characteristics. The selection unit may be configured to select at least one moulding factor having the degree of influence on a specified at least one analysis target characteristic being greater than a first threshold; and the degree of influence on the other at least one analysis target characteristic being smaller than a second threshold.

The selection unit may be configured to select a moulding factor having the degree of influence on a first analysis target characteristic being greater than the first threshold, and the moulding factor of which change does not cause a second analysis target characteristic to go out of a predetermined range.

The calculation unit may be configured to calculate, for each of the plurality of moulding factors, degrees of influence on the plurality of analysis target characteristics. The selection unit may be configured to select at least one moulding factor based on its degree of influence on each analysis target characteristic in a case of causing a targeted change on each analysis target characteristic.

The selection unit may be configured to select a moulding factor having the degree of influence on the first analysis target characteristic being greater than a third threshold in a case of causing a targeted change on the first analysis target characteristic, and the moulding factor of which change causes a targeted change on the second analysis target characteristic.

An input unit may be included, which receives from the user, at least one of: a specification of at least one analysis target characteristic among the plurality of analysis target characteristics; or a specification of a targeted change for the analysis target characteristic.

The display processing unit may be configured to execute display processing for causing the display device to display a parallel coordinate plot or a radar chart which show the degrees of influence of the plurality of moulding factors.

The calculation unit may be configured to calculate as the degree of influence, a degree of change of each moulding factor in a case of changing the each moulding factor from a standard within a predetermined range while other moulding factors are fixed at an optimized value. The calculation unit may be configured to calculate the degree of influence with a plurality of standards and for a plurality of ranges.

The apparatus may be configured to include a transmission unit for transmitting a moulding condition to the fabrication apparatus.

A second aspect of the present invention provides a method for assisting resin moulding, as defined in claim 13.

The method may include executing display processing for causing the display device to display a current combination of the plurality of moulding factors, as well as causing the display device to display prediction data for the analysis target characteristic for the current combination.

The method may include executing display processing for causing the display device to display an optimal combination among a plurality of combinations of the plurality of moulding factors.

A third aspect of the present invention provides a program, as defined in claim 16.

### BRIEF DESCRIPTION OF THE DRAWINGS

Fig. 1 illustrates a system 1 according to the present embodiment.
Fig. 2 illustrates one example of a screen 200 displayed by a display unit 70 of the present embodiment.
Fig. 3 illustrates another example of a screen 300 displayed by the display unit 70 of the present embodiment.
Fig. 4 illustrates a learning flow of a model in an assisting apparatus 3 of the present embodiment.
Fig. 5 illustrates a displaying flow of a moulding factor in the assisting apparatus 3 of the present embodiment.
Fig. 6 illustrates one example of a parallel coordinate plot displayed by a display unit 70 of the present embodiment.
Fig. 7 illustrates another example of the parallel coordinate plot displayed by the display unit 70 of the present embodiment.
Fig. 8 illustrates one example of a radar chart displayed by the display unit 70 of the present embodiment.
Fig. 9 illustrates an example of a computer 2200 in which a plurality of aspects of the present invention may be embodied entirely or partially.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

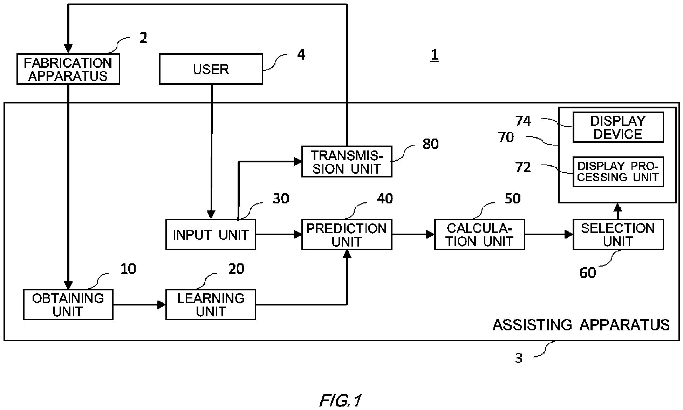

Fig. 1 illustrates a system 1 according to the present embodiment. The system 1 fabricates a resin moulded article by adjusting a resin moulding condition. The system 1 includes a resin moulded article fabrication apparatus 2, and an assisting apparatus 3.

One example of a resin composition used for the fabrication of the resin moulded article includes polyethylene, acrylonitrile, and polyamide, or reinforced plastic composed by adding resin with glass fibre and the like.

The fabrication apparatus 2 is connected to the assisting apparatus 3 via a wired or wireless connection, and fabricates the resin moulded article moulded into a desirable shape by injection moulding, in-mould decoration, or the like. The fabrication apparatus 2 may evaluate a plurality of analysis target characteristics of moulded resin i.e., a resin moulded article, and transmit data representing a plurality of moulding factors, and the analysis target characteristics of the moulded resin to the assisting apparatus 3.

Here, the plurality of moulding factors may be factors that affect quality of the resin moulded article, which may include a moulding condition set by the fabrication apparatus 2. The plurality of moulding factors may be, by way of an example, at least one of a mould thickness, mould temperature, resin type, cooling time, injection temperature, maximum value of injection pressure, holding pressure, a number of screw-rotation, or measurement value. The plurality of moulding factors may also include at least one of a temperature or a humidity in an environment where the fabrication apparatus 2 is installed, a moulding shape, and the like.

The analysis target characteristic may be an evaluation item for determining whether the resin moulded article is a defective product. The analysis target characteristic may include, by way of an example, at least one of a dimension of the resin moulded article, a deviation from a target dimension, a defective mode, number, area, or density caused on the resin moulded article, or a position where a defect is caused.

The assisting apparatus 3 is one example of an apparatus for assisting resin moulding. The assisting apparatus 3 can assist in adjusting the moulding condition by displaying the plurality of moulding factors to a user such as an operator of the fabrication apparatus 2. The assisting apparatus 3 includes an obtaining unit 10, a learning unit 20, an input unit 30, a prediction unit 40, a calculation unit 50, a selection unit 60, and a display unit 70.

The obtaining unit 10 is connected to the fabrication apparatus 2. The obtaining unit 10 is configured to obtain learning data containing a set of values of the plurality of moulding factors and a value of the analysis target characteristic, of which values have been taken from a result of resin moulding in advance. The obtaining unit 10 may obtain the learning data from at least one of the fabrication apparatus 2, a website, or an external recording medium. The set of the values of the plurality of moulding factors and the value of the analysis target characteristic may be a set of: set values of the plurality of moulding factors at a time of resin moulding in advance by the fabrication apparatus 2; and a value of the analysis target characteristic obtained by evaluating a resin moulded article fabricated in this resin moulding.

The learning unit 20 is connected to the obtaining unit 10. The learning unit 20 is configured to learn a model that generates, by using the learning data obtained by the obtaining unit 10, prediction data for the analysis target characteristic from the values of the plurality of moulding factors. The learning unit 20 may generate and update the model by using the learning data.

The input unit 30 may be something for receiving an input from a user 4, such as a keyboard, mouse, or touch panel. The input unit 30 is subjected to be input data from the user 4, which represents at least one display condition (for example, at least one of a specification of at least one analysis target characteristic among the plurality of analysis target characteristics, or a specification of a targeted change for the analysis target characteristic) for the assisting apparatus 3 to display. The display condition includes at least one of ranges of the plurality of moulding factors, a combination of certain values of the plurality of moulding factors, or the analysis target characteristic, for example. The input unit 30 may also receive the data representing the display condition from a terminal such as a computer, tablet, or smart phone of the user 4. In addition, the input unit 30 may receive an input regarding a moulding condition for moulding by the fabrication apparatus 2.

The prediction unit 40 is connected to the learning unit 20 and the input unit 30. The prediction unit 40 receives from the learning unit 20, the model for generating the prediction data for the analysis target characteristic from the values of the plurality of moulding factors, and holds this model. The prediction unit 40 is configured to generate, in response to the input unit 30 inputting data regarding at least one moulding factor of the plurality of moulding factors of the resin moulding, prediction data for the analysis target characteristic by using the model and transmit this prediction data to the calculation unit 50. The prediction unit 40 may transmit the learning data obtained by the obtaining unit 10 to the calculation unit 50.

The calculation unit 50 is connected to the prediction unit 40. The calculation unit 50 is configured to calculate, for each of the plurality of moulding factors of the resin moulding, a degree of influence on the analysis target characteristic of moulded resin. The calculation unit 50 may calculate the degree of influence by using the prediction data received from the prediction unit 40. The calculation unit 50 may calculate, for each of the plurality of moulding factors, degrees of influence on the plurality of analysis target characteristics.

The selection unit 60 is connected to the calculation unit 50. The selection unit 60 is configured to select, based on the degree of influence received from the calculation unit 50, at least one moulding factor among the plurality of moulding factors. The selection unit 60 may select one or more moulding factors that have large degrees of influence and thereby to be emphasised on the display.

The display unit 70 is connected to the selection unit 60. The display unit 70 has a display processing unit 72 and a display device 74. The display processing unit 72 is configured to execute display processing for causing the selected at least one moulding factor to be emphasised on a display of the plurality of moulding factors displayed by the display processing unit 72. The display processing unit 72 may execute processing for generating a display screen, processing for outputting data necessary for displaying (such as data representing the plurality of moulding factors, data for the display screen, data representing an object to be emphasised on the display, data representing a method for emphasising on the display) to the display device 74 via a wireless or wired connection, and the like. The display device 74 may be a display screen of the assisting apparatus 3. The display unit 70 may display at least one of a name of each moulding factor, resin type, unit, available setting range such as a range of the moulding factor input through the input unit 30, or latest set value such as a current optimized value. The display unit 70 may further display at least one of a name of the analysis target characteristic, the evaluation condition, or the prediction data.

The display unit 70 may display the selected at least one moulding factor by emphasising at least one of its colour, pattern, marker, symbol, value of the degree of influence, rank of the degree of influence, magnitude of a numerical value, letter font, or letter size. For example, the display processing unit 72 may execute display processing for at least one of: causing the display device 74 to display the rank of the degree of influence near the display of the at least one moulding factor selected by the selection unit 60; or causing the display device 74 to display at least a part of a plurality of degrees of influence in a predetermine format, in order to emphasise these on the display of the display device 74.The display unit 70 may display the plurality of moulding factors on a screen of this display unit 70. In addition, the display unit 70 may output data for displaying the plurality of moulding factors on an external display. The assisting apparatus 3 may also have a transmission unit 80 for transmitting the moulding condition to the fabrication apparatus 2. The transmission unit 80 may receive the moulding condition input into the input unit 30, and transmit it to the fabrication apparatus 2.

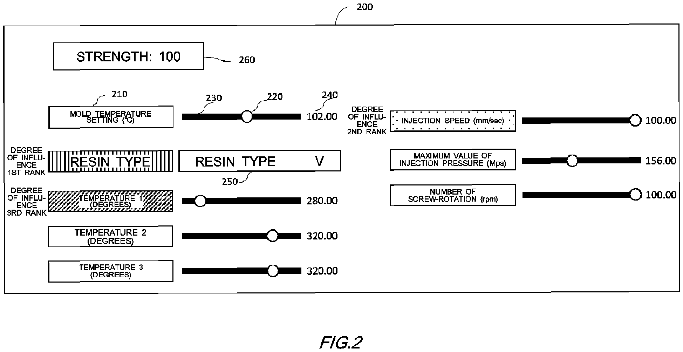

Fig. 2 illustrates one example of a screen 200 displayed by the display unit 70 in the present embodiment. The display unit 70 displays on the screen 200, an item name 210 of the each moulding factor, a slider bar 230 indicating the available setting range of the moulding factor, a pointer 220 indicating a position of a current value on the slider bar 230, a current value 240 of the moulding factor, a list box 250 for the resin type, and a predicted value 260 for the analysis target characteristic for a case of a combination of the current values of the moulding factor. In Fig. 2, the predicted value 260 of the analysis target characteristic indicates that the predicted value of strength of a resin moulded article in the injection moulding is 100. The user 4 can change values of the moulding factors by looking at the screen 200, using a mouse i.e., the input unit 30, and moving the pointer 220 with a mouse pointer, by which the predicted value 260 for the analysis target characteristic predicted by the prediction unit 40 based on the change in a combination of values of these moulding factors changes in real-time on the screen, and thereby the user 4 can easily determine the moulding condition. At this time, the moulding factor to be emphasised on the display based on the degree of influence may change.

In the present embodiment, the display unit 70 emphasises the moulding factors selected by the selection unit 60 and having the degrees of influence ranked from 1 to 3 on the display, in which boxes of their item names (resin type, injection speed, and temperature 1 in Fig. 2) are displayed in colour (or patterns) different from others, and the ranks of the degrees of influence are indicated at positions next to the item names.

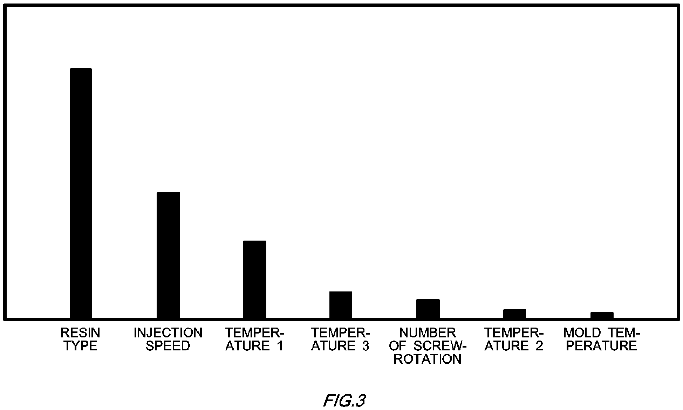

Fig. 3 illustrates another example of a screen 300 displayed by the display unit 70 of the present embodiment. The display unit 70 displays on the screen 300, a graph having a horizontal axis representing an item name of each moulding factor, and a vertical axis representing the degree of influence of each moulding factor. In the graph of Fig. 3, the display unit 70 emphasises the plurality of moulding factors on the display by arranging them in a descending order according to their degrees of influence. In Fig. 3, the display unit 70 may show on the vertical axis, the values of the degrees of influence which are standardised by the calculation unit 50 in a way that a total of the degrees of influence becomes 1.

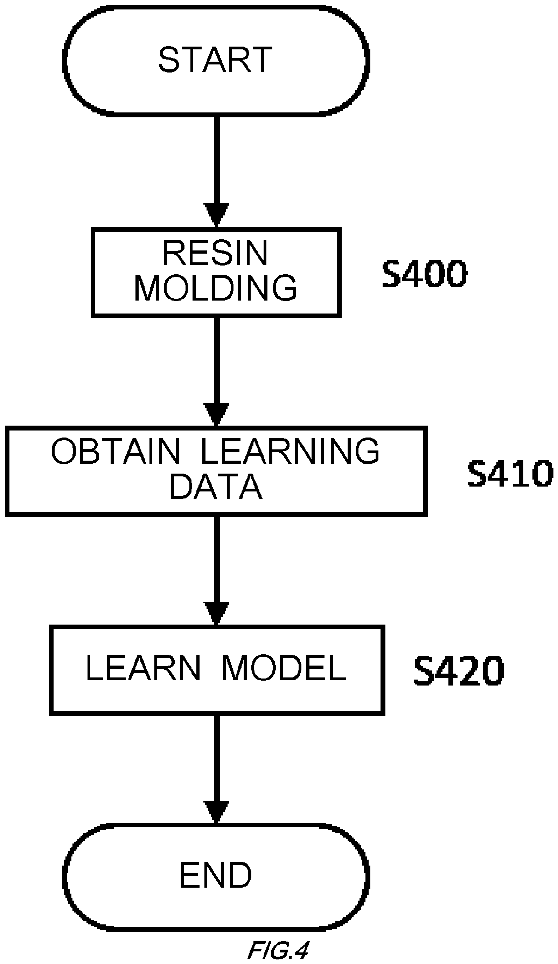

Fig. 4 illustrates a learning flow of the model in the assisting apparatus 3 of the present embodiment. In step S400, the fabrication apparatus 2 performs resin moulding. The fabrication apparatus 2 may perform the resin moulding for a number of times by changing the moulding condition of the resin moulded article.

In step S410, the obtaining unit 10 obtains the learning data from the fabrication apparatus 2. The obtaining unit 10 may receive a plurality of combinations of values of the plurality of moulding factors and a value of the analysis target characteristic from the fabrication apparatus 2. Also, the obtaining unit 10 may obtain values of the plurality of moulding factors, and measurement data of the resin moulded article such as a measurement value of a dimension of the moulded resin, and an image data from the fabrication apparatus 2, and then obtain the value of the analysis target characteristic by evaluating the resin moulded article by the obtaining unit 10.

In step S420, the learning unit 20 learns the model that generates, by using the learning data obtained by the obtaining unit 10, the prediction data for the analysis target characteristic from the values of the plurality of moulding factors. The model may be, by way of an example, for a machine learning algorithm including neural networks of a recurrent type, time-delay type, etc., random forest, gradient boosting, logistic regression, support-vector machine (SVM), and the like. For example, the model may include a node corresponding to each element of the moulding factor in an input layer, and a node corresponding to the analysis target characteristic in an output layer. There may be one or more nodes in the input layer for one element of the moulding factor. An intermediate layer, i.e., a hidden layer, including one or more nodes may be interposed between the input layer and the output layer. The learning unit 20 may execute learning processing by adjusting a weight of an edge connecting the nodes, and a bias value of an output node.

In response to the obtaining unit 10 obtaining the learning data in S410, or based on an input from the user 4, the learning unit 20 may periodically learn and update the model. The learning flow may end when a power supply of the assisting apparatus 3 is turned off.

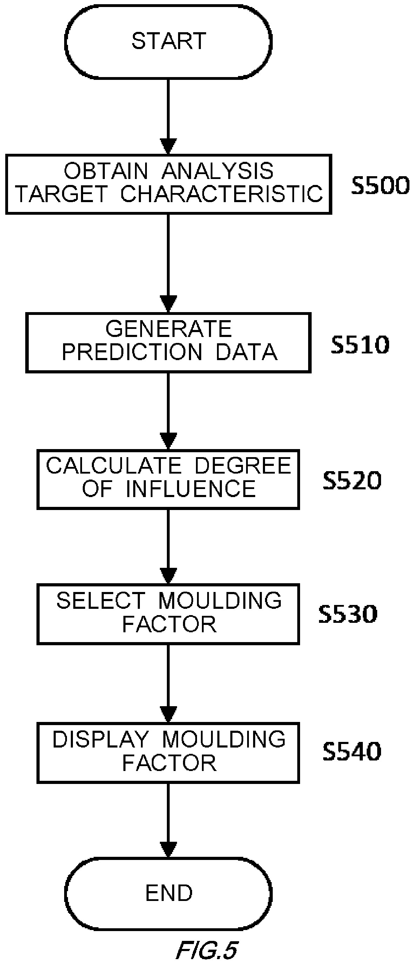

Fig. 5 illustrates a displaying flow of the moulding factor in the assisting apparatus 3 of the present embodiment. In step S500, the input unit 30 obtains a specification of the analysis target characteristic, e.g., strength, from the user 4.

In step S510, the prediction unit 40 uses the model and generates from the plurality of moulding factors, prediction data for a certain analysis target characteristic obtained by the input unit 30. The prediction unit 40 may generate as the prediction data, a plurality of values (or changes) of the analysis target characteristic in a case of changing a corresponding moulding factor among the plurality of moulding factors within a predetermined range. The predetermined range to change may be, for example, a range that is input through the input unit 30 from the user 4 with regard to each moulding factor, or an available setting range for a fabrication apparatus 2 obtained from the fabrication apparatus 2 through the obtaining unit 10.

In step S520, the calculation unit 50 may calculate the degree of influence by using the prediction data from the prediction unit 40, the input data obtained by the input unit 30, the learning data obtained by the obtaining unit 10, and the like. The calculation unit 50 may calculate, among the plurality of combinations of values of the plurality of moulding factors, the degree of influence by using a current optimized value being a combination of values with which the analysis target characteristic becomes excellent or becomes closest to a target value as a standard. The calculation unit 50 may also use as the optimized value being the standard, a combination of the latest values of the plurality of moulding factors obtained by the obtaining unit 10, or a combination of values of the plurality of moulding factors input through the input unit 30. The calculation unit 50 may calculate as the degree of influence, a degree of change of each moulding factor in a case of changing the each moulding factor from the standard within a predetermined range (±x%) (x>0) while other moulding factors are fixed at the optimized value, for example. The calculation unit 50 may calculate the degree of influence with a plurality of standards and for a plurality of ranges. This predetermined range for the changed may be a range smaller than or the same as the predetermined range used by the prediction unit 40, and may be a range different for every moulding factor.

The calculation unit 50 may calculate, as the degree of influence for each of the plurality of moulding factors, a changed degree such as an absolute value of a changed rate of the analysis target characteristic in a case of changing a corresponding moulding factor. For example, the calculation unit 50 may calculate an absolute value of a changed rate of each analysis target characteristic for a plurality of sections, in other words, unit sections created by dividing the predetermined range, average the absolute values of the changed rates for the plurality of sections, and use the result as the degree of influence. In this way, the calculation unit 50 can more accurately calculate a degree of change even when a changed rate of the analysis target characteristic changes from negative to positive. In addition, the calculation unit 50 may calculate as the degree of influence, an absolute value of a changed rate, i.e., differentiated value in a small unit section where a current value of the moulding factor is included.

The calculation unit 50 may calculate a standardised value by dividing the calculated degree of influence by a total of the degrees of influence of all moulding factors. Here, the calculation unit 50 may divide all of the moulding factors in the unit sections where the values of the moulding factors are changed by the available setting range, i.e., a width between a maximum value and a minimum value of a corresponding moulding factor, so that the standardised values are set to be a same. Thereby, the degree of influence can be calculated with high accuracy between a moulding factor having a large available setting range and a moulding factor having a small available setting range.

The calculation unit 50 transmits the degree of influence of each of the plurality of moulding factors to the selection unit 60.

In step S530, the selection unit 60 selects the moulding factor based on the degree of influence calculated by the calculation unit 50. The selection unit 60 may execute at least one of: selecting, among the plurality of moulding factors, at least one moulding factor having the degree of influence ranked within predetermined ranks in a descending order (or ascending order); or selecting, among the plurality of moulding factors, at least one moulding factor having the degree of influence being a predetermined threshold value or more (or less than the predetermined threshold value). The selection unit 60 may select a number of moulding factors predetermined for every analysis target characteristic, or a number of moulding factors specified by the user 4 through the input unit 30, in a descending order (or ascending order) with regard to their degrees of influence. Also, the selection unit 60 may select a moulding factor having the degree of influence being the predetermined threshold value for every analysis target characteristic, or being the threshold value specified by the user 4 through the input unit 30, or more (or less).

In step S540, the display unit 70 displays the plurality of moulding factors on the screen while emphasising the moulding factor selected by the selection unit 60 on the display. For example, the display unit 70 may generate and display a screen such as those of Fig. 2 or 3. The display unit 70 may display a current combination of the plurality of moulding factors as well as the prediction data for the analysis target characteristic for the current combination. The display unit 70 may display, among the plurality of combinations of the plurality of moulding factors, a combination of optimal values, a combination of current values most recently obtained, or a combination of values input by the user through the input unit. The display unit 70 may also generate and output data for the screen, and cause an external display such as a terminal of the user 4 or the fabrication apparatus 2 to display this data.

Here, the assisting apparatus 3 may start, in response to obtaining an input for changing at least one moulding factor from the input unit 30 the flow from any of step S510, S520, and S530 for a combination with the changed plurality of moulding factors. In this way, the assisting apparatus 3 can change the display, for example, change the moulding factor to be emphasised on the display, in real-time based on the degree of influence changed according to the changed plurality of moulding factors. The assisting apparatus 3 may end the processing when the power supply is turned off.

According to the present embodiment, the user can easily distinguish a moulding factor having a large effect on a certain analysis target characteristic, and efficiently adjust the moulding condition in the fabrication apparatus 2. In addition, calculating the degree of influence based on a predicted analysis target characteristic enables the moulding condition to be adjusted by calculating the degree of influence without actually performing resin moulding for many times, and thereby reduction in resin moulding cost, reduction in a period of time for a product to be resin moulded, improvement in an operation rate of the fabrication apparatus, and the like can be achieved.

Note that, the assisting apparatus 3 may not be connected to the fabrication apparatus 2, and the obtaining unit 10 may obtain as the learning data, data of resin moulding in another fabrication apparatus, data stored in a recording medium, or website data.

Further, the assisting apparatus 3 may not include the learning unit 20, and thus may be provided with the model from an external learning apparatus.

The assisting apparatus 3 can calculate, when the plurality of analysis target characteristics is specified by the user 4, the degrees of influence on the plurality of analysis target characteristics, and emphasise the result on the display. The calculation unit 50 may calculate the degree of influence on each of the plurality of analysis target characteristics, and select the moulding factor based on a total of the degrees of influence. For example, the calculation unit 50 divides each of changed values of the plurality of analysis target characteristics in a case of changing the moulding factor in unit sections, by a width between a maximum value and a minimum value in an available changing range of a corresponding analysis target characteristic, and standardise the result. Then, the calculation unit 50 may calculate a total of the standardised changes of the analysis target characteristic, and obtain this total as the degree of influence.

Note that, the calculation unit 50 of the assisting apparatus 3 may calculate, for each of the plurality of moulding factors, degrees of influence on the plurality of analysis target characteristics. Hereinafter, functions, operations, and the like being the same as those of the above-described embodiment will be omitted.

In step S500, the input unit 30 obtains from the user 4, at least one of a specification of one or more first analysis target characteristics, or another one or more second analysis target characteristics. In step S510, the prediction unit 40 uses the model and generates from the plurality of moulding factors, prediction data for the first analysis target characteristic and prediction data for the second analysis target characteristic. The one or more second analysis target characteristics may be obtained with the first analysis target characteristic from the user 4 through the input unit 30, or may also be predetermined. In step S520, the calculation unit 50 may calculate the degrees of influence of the plurality of moulding factors for the first analysis target characteristic and the second analysis target characteristic by using the prediction data from the prediction unit 40, the input data obtained by the input unit 30, the learning data obtained by the obtaining unit 10, and the like.

In step S530, the selection unit 60 selects the moulding factor based on the degree of influence. The selection unit 60 may select at least one moulding factor having the degree of influence on a specified at least one first analysis target characteristic being greater than a first threshold; and the degree of influence on the other at least one second analysis target characteristic being smaller than a second threshold. In this way, the selection unit may select a moulding factor having the degree of influence on a specified first analysis target characteristic being greater than the first threshold, and the moulding factor of which change does not cause a second analysis target characteristic to go out of a predetermined range. The selection unit 60 may also select one or more moulding factors having the largest degree of influence on the first analysis target characteristic from the calculated degrees of influence on the first analysis target characteristic and the second analysis target characteristic, for example. The first threshold and the second threshold may be values obtained with the analysis target characteristic from the user 4 through the input unit 30, predetermined values, or values according to a predetermined regulation.

By way of an example, the selection unit 60 can select a moulding factor having a large degree of influence on strength but small degree of influence on impact resistance, e.g., a mould temperature, and cause the display device 74 to display this moulding factor.

In addition, in step S530, the selection unit 60 may select at least one moulding factor based on the degree of influence on each analysis target characteristic in a case of causing a targeted change on each analysis target characteristic. The selection unit 60 may select a moulding factor having the degree of influence on the first analysis target characteristic being greater than a third threshold in a case of causing a targeted change on the first analysis target characteristic, and the moulding factor of which change causes a targeted change on the second analysis target characteristic. The targeted change may be a change of the analysis target characteristic from a current value, e.g., a value at the current optimal condition, and may be at least one of a positive or negative change of a corresponding analysis target characteristic, a target range of the corresponding analysis target characteristic, or a range of a ratio of the degrees of influence of the plurality of analysis target characteristics. The targeted change may be a change associated with the analysis target characteristic and obtained from the user 4 through the input unit 30, or may also be a predetermined change or a change according to a predetermined regulation.

Specifically, in step S500, the user 4 inputs into the input unit 30, targeted changes for strength and a number of defects being the analysis target characteristics, by which the strength will be positive, and the number of defects will be negative. Based on this, the selection unit 60 may select a moulding factor that has the degree of influence for causing the strength to be positive being greater than the third threshold, and causing the number of defects to be at least negative.

In step S540, the display unit 70 displays degrees of influence of the moulding factors for the plurality of analysis target characteristics on the screen of the display device 74 while emphasising the moulding factor selected by the selection unit 60 on the display. The display processing unit 72 may execute display processing for causing the display device 74 to display a parallel coordinate plot or a radar chart which shows the degrees of influence of the plurality of moulding factors. An example of the display screen will be described below.

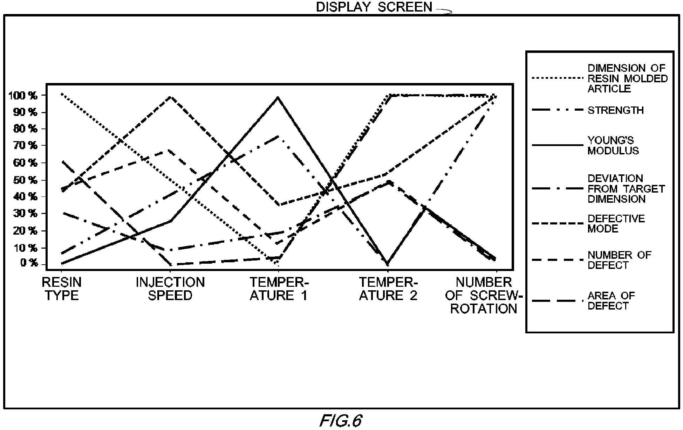

Fig. 6 illustrates one example of the parallel coordinate plot showing the degrees of influence of the plurality of moulding factors. In the graph of Fig. 6, the vertical axis shows as the degrees of influence, changed degrees of the analysis target characteristics in a case of changing corresponding moulding factors, and the horizontal axis represents types of the moulding factors. In Fig. 6, the degree of influence may be displayed with a solid line in order to emphasise Young's modulus on the display.

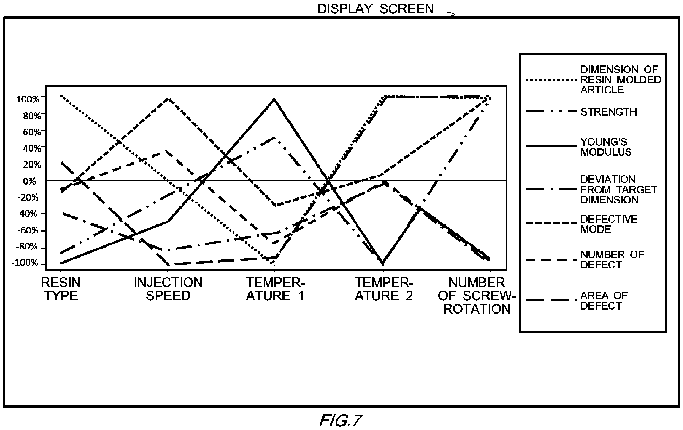

Fig. 7 illustrates another example of the parallel coordinate plot showing the degrees of influence of the plurality of moulding factors. In the graph of Fig. 7, the vertical axis shows as the degrees of influence, changes of the analysis target characteristics from a reference value in a case of changing corresponding moulding factors, and the horizontal axis represents types of the moulding factors. In Fig. 7, the degree of influence may be displayed with a solid line in order to emphasise Young's modulus on the display. In Fig. 7, being positive/negative from the reference value, e.g., a value at the current optimal condition, of the analysis target characteristics is clearly shown.

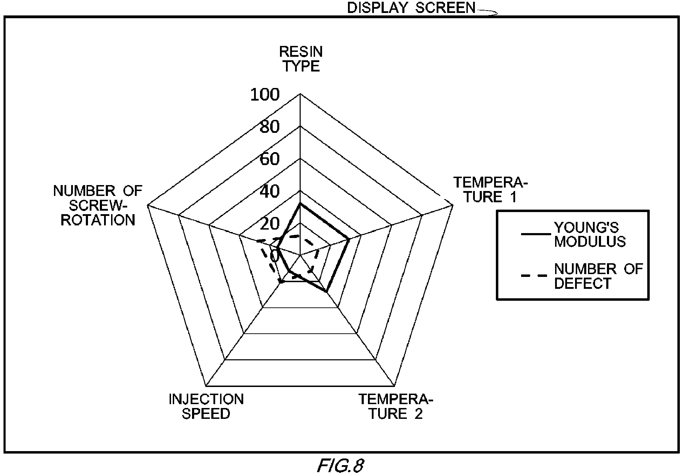

Fig. 8 illustrates one example of a radar chart illustrating the degrees of influence of the plurality of moulding factors. In the graph of Fig. 8, the five items represent types of moulding factors and a changed degree of the analysis target characteristic in a case of changing a corresponding moulding factor is shown as the degrees of influence. In Fig. 8, the degree of influence may be displayed with a solid line in order to emphasise Young's modulus on the display.

According to such an embodiment described above, the moulding condition can be efficiently adjusted based on the degrees of influence of the plurality of analysis target characteristics without actually performing resin moulding for many times, and thereby reduction in resin moulding cost, reduction in a period of time for a product to be resin moulded, improvement in an operation rate of the fabrication apparatus, and the like can be achieved. Note that, the display device 74 may also be an external display device of the assisting apparatus 3 such as a display screen of a terminal of the user 4, or a display screen of the fabrication apparatus 2. Further, the assisting apparatus 3 may be a PC, server, mobile terminal, or the like.

In addition, various embodiments of the present invention may also be described with reference to flowcharts and block diagrams, in which a block may represent (1) a stage of a process in which an operation is performed or (2) a section of an apparatus that has a role of performing the operation. Certain stages and sections may be implemented by dedicated circuitry, programmable circuitry provided with computer-readable instructions stored on a computer-readable medium, and/or a processor provided with computer-readable instructions stored on a computer-readable medium. The dedicated circuitry may include a digital and/or analogue hardware circuit, or may include an integrated circuit (IC) and/or a discrete circuit. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

The computer-readable medium may include any tangible device capable of storing instructions for execution by a suitable device, so that the computer-readable medium having the instructions stored therein will have a product including instructions that can be executed to create means for performing the operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disk (DVD), a BLU-RAY (registered trademark) disk, a memory stick, an integrated circuit card, and the like.

The computer-readable instructions may include assembler instructions, instruction-set-architecture (ISA) instructions, machine instructions, machine-dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

The computer-readable instructions may be provided to a processor of a general purpose computer, special purpose computer, or other programmable data processing apparatus, or to programmable circuitry, locally or via a local area network (LAN), wide area network (WAN) such as the Internet, or the like, to execute the computer-readable instructions to create means for performing operations specified in the flowcharts or block diagrams. Examples of the processor include a computer processor, processing unit, microprocessor, digital signal processor, controller, microcontroller, and the like.

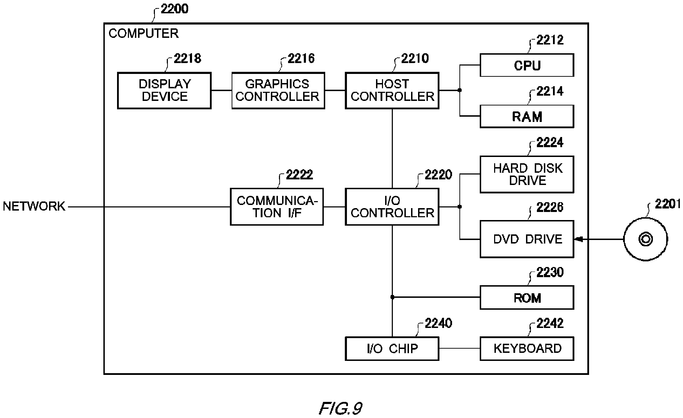

Fig. 9 illustrates an example of a computer 2200 in which a plurality of aspects of the present invention may be embodied entirely or partially. A program installed in the computer 2200 can cause the computer 2200 to function as operations associated with the apparatus of the embodiments of the present invention or one or more sections thereof, or cause the computer 2200 to execute these operations or the one or more sections, and/or cause the computer 2200 to perform processes of the embodiments of the present invention or stages thereof. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes an input/output unit such as a communication interface 2222, a hard disk drive 2224, a DVD-ROM drive 2226, and an IC card drive, which are connected to the host controller 2210 through an input/output controller 2220. The computer also includes legacy input/output units such as a ROM 2230 and a keyboard 2242, which are connected to the input/output controller 2220 through an input/output chip 2240.

The CPU 2212 operates in accordance with programs stored in the ROM 2230 and the RAM 2214, thereby controlling each unit. The graphics controller 2216 obtains image data generated by the CPU 2212 on a frame buffer or the like provided in the RAM 2214 or in the RAM 2214 itself, and causes the image data to be displayed on the display device 2218.

The communication interface 2222 communicates with another electronic device via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from an IC card, and/or writes the programs and the data into the IC card.

The ROM 2230 stores therein a boot program or the like executed by the computer 2200 at a time of activation, and/or a program dependent on the hardware of the computer 2200. The input/output chip 2240 may also connect various input/output units through a parallel port, a serial port, a keyboard port, a mouse port, or the like to the input/output controller 2220.

A program is provided by a computer-readable medium such as the DVD-ROM 2201 or the IC card. The program is read from the computer-readable medium, installed into the hard disk drive 2224, RAM 2214, or ROM 2230, which are also examples of computer-readable media, and then executed by the CPU 2212. Information processing written in these programs is read by the computer 2200, and provides cooperation between the programs and the various types of hardware resources described above. An apparatus or method may be configured by using the computer 2200 and thereby conducting the operations or processing on information.

For example, when communication is executed between the computer 2200 and an external device, the CPU 2212 may execute a communication program loaded onto the RAM 2214, and instruct the communication interface 2222 to process the communication based on the processing written in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc. and execute various types of processing on data on the RAM 2214. The CPU 2212 may then write back the processed data to the external recording medium.

Various types of information, such as various types of programs, data, tables, and databases, may be stored in the recording medium to be processed. The CPU 2212 may execute various types of processing on the data read from the RAM 2214, which includes various types of operations, information processing, conditional judgement, conditional branching, unconditional branching, information retrieval/replacement, etc., as described throughout the present disclosure and specified by an instruction sequence of the programs, and writes a result back to the RAM 2214. In addition, the CPU 2212 may retrieve information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The program or software modules described above may be stored in the computer-readable medium on or near the computer 2200. In addition, a recording medium such as a hard disk or a RAM provided in a server system connected to a dedicated communication network or the Internet can be used as the computer-readable medium, thereby providing the program to the computer 2200 via the network.

While the embodiments of the present invention have been described, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the present invention.

The operations, procedures, steps, stages, and the like of each process performed by an apparatus, system, program, and method shown in the claims, specification, drawings can be performed in any order as long as the order is not indicated by "prior to," "before," or the like and as long as the output from a previous process is not used in a later process. Even if the operation flow is described using phrases such as "first" or "next" in the claims, specification, or drawings, it does not necessarily mean that the process must be performed in this order.

### EXPLANATION OF REFERENCES

1: system;
2: fabrication apparatus;
3: assisting apparatus;
10: obtaining unit;
20: learning unit;
30: input unit;
40: prediction unit;
50: calculation unit;
60: selection unit;
70: display unit;
72: display processing unit;
74: display device;
80: transmission unit;
200: screen;
210: item name;
220: slider bar;
230: pointer;
240: current value;
250: list box;
260: predicted value;
300: screen;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard

## Claims

1. An apparatus (3) configured to assist resin moulding, comprising:
a calculation unit (50) configured to calculate, for each of a plurality of moulding factors of the resin moulding, degrees of influence on a plurality of analysis target characteristics of a resin moulded article;
a selection unit (60) configured to select, based on the degrees of influence, at least one moulding factor among the plurality of moulding factors; and
a display processing unit (70) configured to execute display processing for causing the selected at least one moulding factor to be emphasised while displaying degrees of influence of the moulding factors for the plurality of analysis target characteristics on a display of the plurality of moulding factors displayed by a display device.

2. The apparatus (3) according to claim 1, wherein the display processing unit (70) is configured to execute display processing for at least one of: causing the display device to display a rank of the degree of influence near a display of the selected at least one moulding factor; or causing the display device to display at least a part of a plurality of the degrees of influence in a predetermined format.

3. The apparatus (3) according to claim 1 or 2, wherein the selection unit (60) is configured to execute at least one of: selecting, among the plurality of moulding factors, at least one moulding factor having the degree of influence ranked within predetermined ranks in a descending order; or selecting, among the plurality of moulding factors, at least one moulding factor having the degree of influence being a predetermined threshold value or more.

4. The apparatus (3) according to any one of claims 1 to 3, wherein the calculation unit (50) is configured to calculate, as the degree of influence for each of the plurality of moulding factors, an absolute value of a changed rate of the analysis target characteristic in a case of changing a corresponding one among the plurality of moulding factors.

5. The apparatus (3) according to any one of claims 1 to 4, further comprising:
a prediction unit (40) which includes a model for generating prediction data for the analysis target characteristic from values of the plurality of moulding factors, and which is for generating by using the model, in response to data regarding at least one of the plurality of moulding factors of the resin moulding being input, the prediction data for the analysis target characteristic by using the model.

6. The apparatus (3) according to any one of claims 1 to 5, further comprising:
an obtaining unit (10) configured to obtain learning data containing a set of values of the plurality of moulding factors and a value of the analysis target characteristic, of which values have been taken from a result of performing resin moulding in advance; and
a learning unit (20) configured to learn a model that generates, by using the learning data, prediction data for the analysis target characteristic from the values of the plurality of moulding factors.

7. The apparatus (3) according to any one of claims 1 to 6, wherein
the calculation unit (50) is configured to calculate, for each of the plurality of moulding factors, the degrees of influence on plurality of analysis target characteristics; and
the selection unit (60) is configured to select at least one moulding factor having the degree of influence on a specified at least one analysis target characteristic being greater than a first threshold, and the degree of influence on at least another analysis target characteristic being smaller than a second threshold.

8. The apparatus (3) according to claim 7, wherein the selection unit (60) is configured to select a moulding factor having the degree of influence on a first analysis target characteristic being greater than a first threshold, and the moulding factor of which change does not cause a second analysis target characteristic to go out of a predetermined range.

9. The apparatus (3) according to any one of claims 1 to 6, wherein
the calculation unit (50) is configured to calculate, for each of the plurality of moulding factors, the degrees of influence on plurality of analysis target characteristics; and
the selection unit (60) is configured to select at least one moulding factor based on a degree of influence on each analysis target characteristic in a case of causing a targeted change on each analysis target characteristic.

10. The apparatus (3) according to claim 9, wherein the selection unit (60) is configured to select a moulding factor having the degree of influence on a first analysis target characteristic being greater than a third threshold in a case of causing a targeted change on the first analysis target characteristic, and the moulding factor of which change causes a targeted change on a second analysis target characteristic.

11. The apparatus (3) according to any one of claims 7 to 10, comprising:
an input unit (30) configured to receive from a user, at least one of: a specification of at least one analysis target characteristic among the plurality of analysis target characteristics; or a specification of a targeted change for the analysis target characteristic.

12. The apparatus (3) according to any one of claims 1 to 11, wherein the display processing unit (70) is configured to execute display processing for causing the display device to display a parallel coordinate plot or a radar chart which shows degrees of influence of the plurality of moulding factors.

13. A method for assisting resin moulding, comprising:
calculating, for each of a plurality of moulding factors of the resin moulding, degrees of influence on a plurality of analysis target characteristics of a resin moulded article;
selecting, based on the degrees of influence, at least one moulding factor among the plurality of moulding factors; and
executing display processing for causing the selected at least one moulding factor to be emphasised while displaying degrees of influence of the moulding factors for the plurality of analysis target characteristics on a display of the plurality of moulding factors displayed by a display device.

14. The method according to claim 13, further comprising:
executing display processing for causing the display device to display a current combination of the plurality of moulding factors, as well as causing the display device to display prediction data for the analysis target characteristic for the current combination.

15. The method according to claim 14, further comprising:
executing display processing for causing the display device to display an optimal combination among a plurality of combinations of the plurality of moulding factors.

16. A program configured to cause a computer to perform operations comprising:
calculating, for each of a plurality of moulding factors of resin moulding, degrees of influence on a plurality of analysis target characteristics of a resin moulded article;
selecting, based on the degrees of influence, at least one moulding factor among the plurality of moulding factors; and
executing display processing for causing the selected at least one moulding factor to be emphasised while displaying degrees of influence of the moulding factors for the plurality of analysis target characteristics on a display of the plurality of moulding factors displayed by a display device.

## Patentansprüche

1. Einrichtung (3), die konfiguriert ist, Polymerguß zu unterstützen, umfassend:
eine Berechnungseinheit (50), die konfiguriert ist zum Berechnen von Einflussgraden auf eine Vielzahl von Analysezieleigenschaften eines Polymerformteils für jeden einer Vielzahl von Formungsfaktoren des Polymerformteils;
eine Auswahleinheit (60), die konfiguriert ist zum Auswählen mindestens eines Formungsfaktors aus der Vielzahl der Formungsfaktoren auf der Grundlage der Einflussgrade; und
eine Anzeigeverarbeitungseinheit (70), die konfiguriert ist zum Ausführen einer Anzeigeverarbeitung, um zu bewirken, dass der ausgewählte mindestens eine Formungsfaktor hervorgehoben wird, während Einflussgrade der Formungsfaktoren für die Vielzahl von Analysezielmerkmalen auf einer Anzeige der Vielzahl von Formungsfaktoren angezeigt werden, die durch eine Anzeigevorrichtung angezeigt werden.

2. Einrichtung (3) gemäß Anspruch 1, wobei die Anzeigeverarbeitungseinheit (70) konfiguriert ist, eine Anzeigeverarbeitung auszuführen für mindestens eines von: Veranlassen der Anzeigevorrichtung, einen Rang des Einflussgrades in der Nähe einer Anzeige des ausgewählten mindestens einen Formungsfaktors anzuzeigen; oder Veranlassen der Anzeigevorrichtung, mindestens einen Teil einer Vielzahl der Einflussgrade in einem vorgegebenen Format anzuzeigen.

3. Einrichtung (3) gemäß Anspruch 1 oder 2, wobei die Auswahleinheit (60) konfiguriert ist, mindestens einen auszuführen von: Auswählen mindestens eines Formungsfaktors aus der Vielzahl von Formungsfaktoren, dessen Einflussgrad innerhalb vorbestimmter Ränge in absteigender Reihenfolge angeordnet ist; oder Auswählen mindestens eines Formungsfaktors aus der Vielzahl von Formfaktoren, dessen Einflussgrad ein vorbestimmter Schwellenwert oder mehr ist.

4. Einrichtung (3) gemäß einem der Ansprüche 1 bis 3, wobei die Berechnungseinheit (50) so konfiguriert ist, dass sie als den Einflussgrad für jeden der Vielzahl von Formungsfaktoren einen absoluten Wert einer Änderungsrate der Analysezieleigenschaft im Falle der Änderung eines entsprechenden der Vielzahl von Formungsfaktoren berechnet.

5. Einrichtung (3) gemäß einem der Ansprüche 1 bis 4, ferner umfassend:
eine Vorhersageeinheit (40), die ein Modell zum Erzeugen von Vorhersagedaten für das Analysezielmerkmal aus Werten der Vielzahl von Formungsfaktoren enthält und die dazu dient, unter Verwendung des Modells als Reaktion auf Daten bezüglich mindestens eines der Vielzahl von Formungsfaktoren der Polymerformung die Vorhersagedaten für das Analysezielmerkmal zu erzeugen.

6. Einrichtung (3) gemäß einem der Ansprüche 1 bis 5, ferner umfassend:
eine Erfassungseinheit (10), die konfiguriert ist, Lerndaten zu erhalten, die einen Satz von Werten der Vielzahl von Formungsfaktoren und einen Wert des Analysezielmerkmals enthalten, wobei die Werte aus einem Ergebnis der Durchführung der Polymerformung im Voraus genommen wurden; und
eine Lerneinheit (20), die konfiguriert ist, ein Modell zu lernen, das unter Verwendung der Lerndaten Vorhersagedaten für das Analysezielmerkmal aus den Werten der Vielzahl von Formungsfaktoren erzeugt.

7. Einrichtung (3) gemäß einem der Ansprüche 1 bis 6, wobei
die Berechnungseinheit (50) konfiguriert ist, für jeden der Vielzahl von Formungsfaktoren den Grad des Einflusses auf eine Vielzahl von Analysezieleigenschaften zu berechnen; und
die Auswahleinheit (60) konfiguriert ist, mindestens einen Formungsfaktor auszuwählen, bei dem der Grad des Einflusses auf mindestens ein spezifiziertes Analysezielmerkmal größer als ein erster Schwellenwert ist und der Grad des Einflusses auf mindestens ein anderes Analysezielmerkmal kleiner als ein zweiter Schwellenwert ist.

8. Einrichtung (3) gemäß Anspruch 7, wobei die Auswahleinheit (60) konfiguriert ist, einen Formungsfaktor auszuwählen, dessen Einflussgrad auf ein erstes Analysezielmerkmal größer als ein erster Schwellenwert ist und dessen Änderung nicht dazu führt, dass ein zweites Analysezielmerkmal aus einem vorbestimmten Bereich herausgeht.

9. Einrichtung (3) gemäß einem der Ansprüche 1 bis 6, wobei
die Berechnungseinheit (50) konfiguriert ist, für jeden der Vielzahl von Formungsfaktoren den Grad des Einflusses auf eine Vielzahl von Analysezielmerkmalen zu berechnen; und
die Auswahleinheit (60) konfiguriert ist, mindestens einen Formungsfaktor auf der Grundlage eines Grades des Einflusses auf jedes Analysezielmerkmal in einem Fall auszuwählen, in dem eine gezielte Änderung jedes Analysezielmerkmals verursacht wird.

10. Einrichtung (3) gemäß Anspruch 9, wobei die Auswahleinheit (60) konfiguriert ist, einen Formungsfaktor auszuwählen, dessen Einflussgrad auf ein erstes Analysezielmerkmal größer als ein dritter Schwellenwert ist, wenn er eine gezielte Änderung des ersten Analysezielmerkmals verursacht, und dessen Änderung eine gezielte Änderung eines zweiten Analysezielmerkmals verursacht.

11. Einrichtung (3) gemäß einem der Ansprüche 7 bis 10, umfassend:
eine Eingabeeinheit (30), die konfiguriert ist, von einem Benutzer zu empfangen mindestens eines von: einer Spezifikation von mindestens einem Analysezielmerkmal aus der Vielzahl von Analysezielmerkmalen; oder einer Spezifikation einer angestrebten Änderung für das Analysezielmerkmal.

12. Einrichtung (3) gemäß einem der Ansprüche 1 bis 11, wobei die Anzeigeverarbeitungseinheit (70) konfiguriert ist, eine Anzeigeverarbeitung auszuführen, um zu bewirken, dass die Anzeigevorrichtung ein paralleles Koordinatendiagramm oder ein Radardiagramm anzeigt, das den Grad des Einflusses der Vielzahl von Formungsfaktoren zeigt.

13. Verfahren zur Unterstützung des Polymergießens, umfassend:
Berechnen von Einflussgraden auf eine Vielzahl von Analysezieleigenschaften eines Polymerformteils für jeden einer Vielzahl von Formungsfaktoren des Polymerformteils;
Auswählen mindestens eines Formungsfaktors aus der Vielzahl der Formungsfaktoren auf Basis der Einflussgrade; und
Ausführen einer Anzeigeverarbeitung, um zu bewirken, dass der ausgewählte mindestens eine Formungsfaktor hervorgehoben wird, während Einflussgrade der Formungsfaktoren für die Vielzahl von Analysezielmerkmalen auf einer Anzeige der Vielzahl von Formungsfaktoren angezeigt werden, die von einer Anzeigevorrichtung angezeigt werden.

14. Verfahren gemäß Anspruch 13, ferner umfassend:
Ausführen einer Anzeigeverarbeitung, um die Anzeigevorrichtung zu veranlassen, eine aktuelle Kombination der Vielzahl von Formungsfaktoren anzuzeigen, wie auch die Anzeigevorrichtung zu veranlassen, Vorhersagedaten für das Analysezielmerkmal für die aktuelle Kombination anzuzeigen.

15. Verfahren gemäß Anspruch 14, ferner umfassend:
Ausführen der Anzeigeverarbeitung, um die Anzeigevorrichtung zu veranlassen, eine optimale Kombination aus einer Vielzahl von Kombinationen der Vielzahl von Formungsfaktoren anzuzeigen.

16. Programm, das so konfiguriert ist, dass es einen Computer veranlasst, Operationen durchzuführen, die umfassen:
Berechnen des Grades des Einflusses auf eine Vielzahl von Analysezielmerkmalen eines Polymerformartikels für jeden einer Vielzahl von Formungsfaktoren der Polymerformung;
Auswählen mindestens eines Formungsfaktors aus der Vielzahl der Formungsfaktoren auf Basis der Einflussgrade; und
Ausführen einer Anzeigeverarbeitung, um zu bewirken, dass der ausgewählte mindestens eine Formungsfaktor hervorgehoben wird, während Einflussgrade der Formungsfaktoren für die Vielzahl von Analysezielmerkmalen auf einer Anzeige der Vielzahl von Formungsfaktoren angezeigt werden, die von einer Anzeigevorrichtung angezeigt werden.

## Revendications

1. Appareil (3) configuré pour aider au moulage de résine, comprenant :
une unité de calcul (50) configurée pour calculer, pour chacun d'une pluralité de facteurs de moulage du moulage de résine, des degrés d'influence sur une pluralité de caractéristiques cibles d'analyse d'un article moulé en résine ;
une unité de sélection (60) configurée pour sélectionner, sur la base des degrés d'influence, au moins un facteur de moulage parmi la pluralité de facteurs de moulage ; et
une unité de traitement d'affichage (70) configurée pour exécuter un traitement d'affichage pour amener l'au moins un facteur de moulage sélectionné à être souligné pendant l'affichage de degrés d'influence des facteurs de moulage pour la pluralité de caractéristiques cibles d'analyse sur un affichage de la pluralité de facteurs de moulage affichés par un dispositif d'affichage.

2. Appareil (3) selon la revendication 1, dans lequel l'unité de traitement d'affichage (70) est configurée pour exécuter un traitement d'affichage pour au moins un parmi : amener le dispositif d'affichage à afficher un rang du degré d'influence à proximité d'un affichage de l'au moins un facteur de moulage sélectionné ; ou amener le dispositif d'affichage à afficher au moins une partie d'une pluralité des degrés d'influence dans un format prédéterminé.

3. Appareil (3) selon la revendication 1 ou la revendication 2, dans lequel l'unité de sélection (60) est configurée pour exécuter au moins un parmi :
sélectionner, parmi la pluralité de facteurs de moulage, au moins un facteur de moulage présentant le degré d'influence classé dans des rangs prédéterminés dans un ordre décroissant ; ou
sélectionner, parmi la pluralité de facteurs de moulage, au moins un facteur de moulage dont le degré d'influence est égal ou supérieur à une valeur seuil prédéterminée.

4. Appareil (3) selon l'une quelconque des revendications 1 à 3, dans lequel l'unité de calcul (50) est configurée pour calculer, en tant que degré d'influence pour chacun de la pluralité de facteurs de moulage, une valeur absolue d'un taux modifié de la caractéristique cible d'analyse dans un cas de modification d'un facteur correspondant parmi la pluralité de facteurs de moulage.

5. Appareil (3) selon l'une quelconque des revendications 1 à 4, comprenant en outre :
une unité de prédiction (40) qui inclut un modèle pour générer des données de prédiction pour la caractéristique cible d'analyse à partir de valeurs de la pluralité de facteurs de moulage, et qui est destinée à générer, à l'aide du modèle, en réponse à des données concernant au moins l'un de la pluralité de facteurs de moulage du moulage de résine entré, les données de prédiction pour la caractéristique cible d'analyse en utilisant le modèle.

6. Appareil (3) selon l'une quelconque des revendications 1 à 5, comprenant en outre :
une unité d'obtention (10) configurée pour obtenir des données d'apprentissage contenant un ensemble de valeurs de la pluralité de facteurs de moulage et une valeur de la caractéristique cible d'analyse, dont des valeurs ont été prélevées à partir d'un résultat de réalisation d'un moulage de résine à l'avance ; et
une unité d'apprentissage (20) configurée pour apprendre un modèle qui génère, à l'aide des données d'apprentissage, des données de prédiction pour la caractéristique cible d'analyse à partir des valeurs de la pluralité de facteurs de moulage.

7. Appareil (3) selon l'une quelconque des revendications 1 à 6, dans lequel
l'unité de calcul (50) est configurée pour calculer, pour chacun de la pluralité de facteurs de moulage, les degrés d'influence sur une pluralité de caractéristiques cibles d'analyse ; et
l'unité de sélection (60) est configurée pour sélectionner au moins un facteur de moulage dont le degré d'influence sur au moins une caractéristique cible d'analyse spécifiée est supérieur à un premier seuil, et le degré d'influence sur au moins une autre caractéristique cible d'analyse est inférieur à un deuxième seuil.

8. Appareil (3) selon la revendication 7, dans lequel l'unité de sélection (60) est configurée pour sélectionner un facteur de moulage dont le degré d'influence sur une première caractéristique cible d'analyse est supérieur à un premier seuil, et dont la modification du facteur de moulage ne provoque pas la sortie d'une deuxième caractéristique cible d'analyse d'une plage prédéterminée.

9. Appareil (3) selon l'une quelconque des revendications 1 à 6, dans lequel
l'unité de calcul (50) est configurée pour calculer, pour chacun de la pluralité de facteurs de moulage, les degrés d'influence sur une pluralité de caractéristiques cibles d'analyse ; et
l'unité de sélection (60) est configurée pour sélectionner au moins un facteur de moulage sur la base d'un degré d'influence sur chaque caractéristique cible d'analyse dans un cas de provocation d'une modification ciblée sur chaque caractéristique cible d'analyse.

10. Appareil (3) selon la revendication 9, dans lequel l'unité de sélection (60) est configurée pour sélectionner un facteur de moulage dont le degré d'influence sur une première caractéristique cible d'analyse est supérieur à un troisième seuil dans un cas de provocation d'une modification ciblée sur la première caractéristique cible d'analyse, et dont la modification du facteur de moulage provoque une modification ciblée sur une deuxième caractéristique cible d'analyse.

11. Appareil (3) selon l'une quelconque des revendications 7 à 10, comprenant :
une unité d'entrée (30) configurée pour recevoir, en provenance d'un utilisateur, au moins l'un parmi : une spécification d'au moins une caractéristique cible d'analyse parmi la pluralité de caractéristiques cibles d'analyse ; ou une spécification d'une modification ciblée pour la caractéristique cible d'analyse.

12. Appareil (3) selon l'une quelconque des revendications 1 à 11, dans lequel l'unité de traitement d'affichage (70) est configurée pour exécuter un traitement d'affichage pour amener le dispositif d'affichage à afficher un tracé de coordonnées parallèle ou un diagramme en radar qui montre des degrés d'influence de la pluralité de facteurs de moulage.

13. Procédé pour aider au moulage de résine, consistant à :
calculer, pour chacun d'une pluralité de facteurs de moulage du moulage de résine, des degrés d'influence sur une pluralité de caractéristiques cibles d'analyse d'un article moulé en résine ;
sélectionner, sur la base des degrés d'influence, au moins un facteur de moulage parmi la pluralité de facteurs de moulage ; et
exécuter un traitement d'affichage pour amener l'au moins un facteur de moulage sélectionné à être souligné pendant l'affichage de degrés d'influence des facteurs de moulage pour la pluralité de caractéristiques cibles d'analyse sur un affichage de la pluralité de facteurs de moulage affichés par un dispositif d'affichage.

14. Procédé selon la revendication 13, consistant en outre à :
exécuter un traitement d'affichage pour amener le dispositif d'affichage à afficher une combinaison en cours de la pluralité de facteurs de moulage, ainsi qu'amener le dispositif d'affichage à afficher des données de prédiction pour la caractéristique cible d'analyse pour la combinaison en cours.

15. Procédé selon la revendication 14, consistant en outre à :
exécuter un traitement d'affichage pour amener le dispositif d'affichage à afficher une combinaison optimale parmi une pluralité de combinaisons de la pluralité de facteurs de moulage.

16. Programme configuré pour amener un ordinateur à exécuter des opérations comprenant :
calculer, pour chacun d'une pluralité de facteurs de moulage de résine, des degrés d'influence sur une pluralité de caractéristiques cibles d'analyse d'un article moulé en résine ;
sélectionner, sur la base des degrés d'influence, au moins un facteur de moulage parmi la pluralité de facteurs de moulage ; et
exécuter un traitement d'affichage pour amener l'au moins un facteur de moulage sélectionné à être souligné pendant l'affichage de degrés d'influence des facteurs de moulage pour la pluralité de caractéristiques cibles d'analyse sur un affichage de la pluralité de facteurs de moulage affichés par un dispositif d'affichage.
